# EUROPÄISCHE PATENTSCHRIFT

(11) **EP 1 761 933 B1**
(45) Veröffentlichungstag und Bekanntmachung des Hinweises auf die Patenterteilung: **28.10.2009**
(21) Anmeldenummer: 05755411.5
(22) Anmeldetag: 28.06.2005
(51) Int. Cl.: G21C 21/00, C21D 9/08

(54) **VERFAHREN UND VORRICHTUNG ZUR WÄRMEBEHANDLUNG EINES BRENNELEMENTKASTENS AUS EINER ZIRKONIUMLEGIERUNG**
METHOD AND DEVICE FOR HEAT TREATING A FUEL ASSEMBLY BOX MADE OF A ZIRCONIUM ALLOY
PROCEDE ET DISPOSITIF DE TRAITEMENT THERMIQUE D'UNE GAINE D'ELEMENTS COMBUSTIBLES A BASE D'UN ALLIAGE DE ZIRCONIUM

(30) Priorität: 28.06.2004 DE 102004031192
(43) Veröffentlichungstag der Anmeldung: 14.03.2007
(73) Patentinhaber: AREVA NP GmbH, 91052 Erlangen (DE)
(72) Erfinder: KÖRZENDÖRFER, Maximilian, 91301 Forchheim (DE); MÖCKEL, Andreas, 91091 Grossenseebach (DE); BLOCK, Bernd, 91054 Erlangen (DE); LIPPERT, Hans, Joachim, 91315 Höchstadt (DE)
(74) Vertreter: Mörtel & Höfner
(86) Internationale Anmeldenummer: PCT/EP2005/006937
(87) Internationale Veröffentlichungsnummer: WO 2006/000450

(56) Entgegenhaltungen:
- EP-A- 1 119 005
- US-A- 3 593 972
- US-A- 4 142 713
- US-A- 5 140 118
- DATABASE WPI Section Ch, Week 198544 Derwent Publications Ltd., London, GB; Class M24, AN 1985-275101 XP002351216 -& SU 1 152 096 A (CHUDNOVSKII V S) 23. April 1985 (1985-04-23)

## Beschreibung

Die Erfindung betrifft ein Verfahren und eine Vorrichtung zur Wärmebehandlung eines Brennelementkastens aus einer Zirkoniumlegierung, insbesondere aus Zircaloy. Ein Brennelementkasten bildet die Umhüllung eines Brennelementes eines Siedewasserreaktors. Während der Bestrahlung im Reaktor erfahren die Brennelementkästen Dimensionsänderungen wie Längenänderung, Kastenverbiegung und Kastenaufweitung. Diese Dimensionsänderungen sind abhängig von der Materialtextur, die sich während des Blechherstellungsprozesses einstellt. Zur Verbesserung der texturabhängigen Dimensionsstabilität während des Betriebs im Reaktor wird bei Brennelementkästen die ursprüngliche Blechtextur durch eine Wärmebehandlung im Zuge des Herstellungsverfahrens ausgelöscht. Dabei wird der Brennelementkasten bei dem dieser kontinuierlich durch eine Wärmebehandlungsvorrichtung hindurch bewegt und dabei längenabschnittsweise mit Hilfe einer ihn umgreifenden induktiven Heizzone in das Betaphasen-Gebiet erwärmt und ein derart erwärmter Längsabschnitt nach Verlassen der Heizzone in einer Kühlzone auf eine im Alphaphasen-Gebiet liegende Temperatur abgekühlt wird. Dabei kommt es zu einer kristallographisch regellosen verteilung der Kristallite durch Auslöschung der typischen Textur im Blechmaterial. Das Aufheizen erfolgt meist mit Hilfe einer Induktionsspule, abgekühlt wird mit Wasser oder mit Inertgas.

Aufgabe der Erfindung ist es, ein alternatives Verfahren zur Wärmebehandlung von Brennelementkästen aus Zircaloy und eine dafür geeignete Vorrichtung vorzuschlagen, die hinsichtlich des Aufheizens und Abkühlens des Brennelementkastens eine größere Variabilität bei der Verfahrensdurchführung bieten.

Diese Aufgabe wird hinsichtlich des Verfahrens durch Anspruch 1 und hinsichtlich einer Vorrichtung durch Anspruch 13 gelöst.

Nach Anspruch 1 ist ein Verfahren vorgesehen, bei dem die Wärmebehandlung mit Hilfe wenigstens zweier in Kastenlängsrichtung voneinander beabstandeter, unabhängig voneinander arbeitender und jeweils wenigstens eine Induktionsspule enthaltender Heizeinrichtungen erfolgt, wobei ein in die Heizzone eintretender Kastenabschnitt mit einer ersten Heizeinrichtung aufgeheizt und anschließend mit einer gegenüber der ersten Heizeinrichtung leistungsschwächeren zweiten Heizeinrichtung wärmebehandelt wird.

Ein Vorteil einer zweistufigen Erwärmung liegt darin, dass im Vergleich zur Wärmebehandlung mit nur einer Spule eine exaktere Einstellung der gewünschten Solltemperatur sowie eine größere Variabilität hinsichtlich der Wärmebehandlung möglich ist. Vorzugsweise erfolgt mit der ersten Stufe eine Erwärmung bis nahe der im Betaphasen-Gebiet liegenden Solltemperatur durch Leistungsregelung. Für die restliche Erwärmung auf Solltemperatur dient dann die zweite, schwächer dimensionierte Induktionsspule. Aufgrund ihrer schwächeren Leistung lässt sich die von ihr erzeugte Induktionswärme genauer steuern, so dass die Solltemperatur auf exakte und reproduzierbare Werte einstellbar ist.

Bedingt durch die Geometrie eines Brennelementkasten erfolgt in dessen Eckbereiche eine verstärkte induktive Ankopplung mit der Folge, dass sich die Eckbereich stärker erhitzen als die Wandbereiche. Wird ein derart ungleichmäßig erhitzter Brennelementkasten ins Alphaphasen-Gebiet abgekühlt, besteht die Gefahr, dass sich in den Eckbereiche und in den Wandbereiche unterschiedliche Werkstoffparameter ergeben. Durch die erfindungsgemäße zweistufige Aufheizung lässt sich dies vermeiden. Einem eine erste Heizeinrichtung verlassenden Kastenabschnitt mit inhomogener Temperaturverteilung bleibt nämlich während des Durchlaufs durch eine zweite Heizeinrichtung genügend Zeit für einen Temperaturausgleich in Umfangs- und gegebenenfalls auch in Längsrichtung, so dass er nach Verlassen der zweiten Heizeinrichtung eine gleichmäßige Temperatur aufweist. Der Effekt des stärkeren Aufheizens der Eckbereiche ist aufgrund der wesentlich geringeren Induktion in der zweiten Heizeinrichtung entsprechend gering und macht sich daher nur in einem weit geringeren Ausmaß bemerkbar.

Eine andere bevorzugte Variante der Wärmebehandlung sieht vor, dass die Abkühlung eines eine erste Heizeinrichtung verlassender Kastenabschnitt mit einer zweiten Heizeinrichtung kontrolliert verlangsamt wird, indem diesem eine entsprechend geringe Wärmemenge zugeführt wird. Mit einer solchen Verfahrensführung kann beispielsweise die Aufenthaltsdauer eines Kastenabschnitts in einem oberhalb von etwa 630 °C liegendem Temperaturgebiet verlängert werden, um dadurch ein gezieltes Kornwachstum und eine Vergrößerung von Sekundärausscheidungen zu erreichen. Ein derart kontrolliertes Abkühlen wird nun dadurch erleichtert oder überhaupt erst möglich, wenn nicht mit Wasser, sondern mit Inertgas abgekühlt wird. Zusammen mit der zweistufigen Wärmebehandlung ergeben sich dabei vielfältige Möglichkeiten einerseits des kontrollierten Wärmeeintrags und andererseits des kontrollierten Wärmeentzugs zur Verfügung.

Beispielsweise sind sehr feine intermetallische Phasen bzw. Sekundärphasen, die sich bei raschem Abkühlen bilden, nicht immer zweckmäßig. Bei sehr langer Aufenthaltsdauer eines Brennelementkastens im Siedewasserreaktor, was bei hohen Abbränden der Fall ist, sind sie eher ungünstig, weil sie zu einer erhöhten gleichmäßigen Korrosion führen.

In regelungstechnischer Hinsicht ist die Verfahrensdurchführung optimiert, indem eine erste Heizeinrichtung leistungsgeregelt und eine zweite Heizeinrichtung temperaturgeregelt ist, wobei eine berührungslose Messung der Kastentemperatur, insbesondere mit Hilfe eines Zweifarben- oder eines Quotientenpyrometers, erfolgt.

Die in Kombination mit einer zweistufigen induktiven Wärmebehandlung durchgeführte Inertgasabkühlung hat den Vorteil, dass die Oberfläche des Brennelementkastens nicht anläuft bzw. sich mit einer Oxidschicht überzieht, die nach der Wärmebehandlung in aufwendiger Weise wieder entfernt werden muss. In diesem Zusammenhang ist es vorteilhaft, wenn während der Wärmebehandlung ein Inertgaspolster aufrecht erhalten wird, das sich in Kastenlängsrichtung sowohl, über die Heizzone als auch über die Kühlzone hinweg erstreckt.

Bei einer besonders bevorzugten Verfahrensvariante wird das Inertgaspolster in einem relativ zum Brennelementkasten bewegten und diesen umgreifenden Gehäuse aufrechterhalten. Die axiale Länge des Inertgaspolsters entspricht dabei etwa der Länge des Gehäuses. Die relative Geschwindigkeit zwischen Brennelementkasten und Heiz- bzw. Kühlzone, die Länge des Inertgaspolster und die zur Kühlung zugeführte Inertgasmenge sind dabei so aufeinander abgestimmt, dass ein das Inertgaspolster verlassender Kastenbereich eine unterhalb der Anlauftemperatur des jeweils verwendeten Kastenmaterials liegende Temperatur hat. Denkbar ist auch, dass der gesamte Brennelementkasten in einer Kammer angeordnet ist, in der sich über die gesamte Länge des Brennelementkastens erstreckendes Intertgaspolster aufrechterhalten wird.

Eine zusätzliche Möglichkeit, die Abkühlung des Brennelementkastens individuell zu steuern sieht vor, dass in der Kühlzone neben der Inertgaskühlung eine zusätzliche Abkühlung mit Hilfe eines den Brennelementkasten umfassenden mit einem Fluid, beispielsweise mit Wasser gekühlten Kühlkörper erfolgt. Um während der Wärmebehandlung eine Oxidation der Innenfläche des Brennelementkastens zu vermeiden, wird darin eine Inertgasatmosphäre aufrecht erhalten. Bei einer weiteren bevorzugten Verfahrensdurchführung wird der Brennelementkasten während der Wärmebehandlung ortsfest gehalten und die Heiz- und Kühlzone in Kastenlängsrichtung bewegt. Auf diese Weise wird die Bauhöhe einer Apparatur verringert.

Eine die eingangs gestellte Aufgabe lösende Vorrichtung umfasst eine Heizzone mit wenigstens einer ersten Heizeinrichtung und wenigstens einer dieser in Bearbeitungsrichtung () nachfolgenden zweiten Heizeinrichtung, wobei die Heizeinrichtungen jeweils mindestens eine den Brennelementkasten umgreifende Induktionsspule aufweisen, und wobei eine erste Heizeinrichtung eine stärkere Leistung aufweist als eine zweite Heizeinrichtung. Weiterhin umfasst die Vorrichtung eine mit Axialabstand zur Heizzone angeordnete, eine Kühlzone bildende Kühleinrichtung, die wenigstens eine Düse umfasst, mit der ein Inertgasstrom vollumfänglich auf die Außenfläche eines Brennelementkastens leitbar ist.

Das Gehäuse bildet einen Träger für die wenigstens eine Induktionsspule und für die wenigstens eine Inertgasdüse und bildet eine äußere Umgrenzung für ein einen Brennelementkasten umfassendes Inertgaspolster. Dieses bildet sich infolge des aus einer Düse ausströmenden Inertgases.

Vorzugsweise ist wenigstens eine Induktionsspule am Außenumfang des Gehäuses angeordnet, wobei das Gehäuse zumindest in dem von der Induktionsspule umfassten Bereich aus einem Material besteht, dass für ein elektromagnetisches Feld durchlässig ist. Die Anordnung einer Induktionsspule am Außenumfang des Gehäuses ist aus Platzgründen vorteilhaft. Außerdem ist eine thermische Beeinflussung durch die innerhalb des Gehäuses herrschenden hohen Temperaturen verringert.

Wie bereits weiter oben kurz erläutert, ist in regelungstechnischer Hinsicht eine zweistufige Erwärmung vorteilhaft. Zwei zu diesem Zweck hintereinander gestaltete Induktionsspulen sind dabei durch eine zwischen ihnen angeordnete Abschirmung, insbesondere einen den Außenumfang des Gehäuses umgreifenden Flansch aus einem elektrisch leitenden Material voneinander getrennt.

Zum Kühlen geeignete Düsen weisen eine Vielzahl von Austrittsöffnung auf, die auf die Außenfläche des Brennelementkastens gerichtet sind. Damit dieser in Umfangsrichtung gleichmäßig gekühlt werden kann, wäre denkbar, eine ringförmige Düse vorzusehen, die im Anwendungsfall vom Brennelementkasten durchsetzt ist. Aufgrund der hohen Temperatur innerhalb des Gehäuses bietet sich als Material für Düsen ein metallischer Werkstoff an. Um eine induktive Ankopplung an die Induktionsspulen zu vermeiden, sind wenigstens zwei Düsen vorgesehen, die in Umfangsrichtung des Gehäuses gesehen elektrisch voneinander getrennt sind. Denkbar ist auch die Verwendung eines hitzebeständigen nicht metallischen Materials, beispielsweise Keramik, oder eines Sintermetalls. Bei diesen Materialien erfolgt keine induktive Ankopplung. Die Anordnung einer Düse innerhalb eines Gehäuses hat den Vorteil, dass deren Austrittsöffnungen sehr nahe an der Außenfläche eines Brennelementkastens angeordnet und dadurch dieser effektiver gekühlt werden kann. Das in das Gehäuse einströmende Inertgas, muss diese naturgemäß auch wieder verlassen. Dazu wäre eine Ausströmöffnung in der Gehäusewand denkbar. Dies würde aber auf den Umfang eines Brennelementkastens bezogen ungleichmäßige Strömungsverhältnisse und dadurch eventuell ungleichmäßige Kühlraten zur Folge haben. Bei einer bevorzugten Ausgestaltung ist deshalb vorgesehen, dass das Gehäuse zwei stirnseitige, im Anwendungsfall von einem Brennelementkasten durchgriffene Öffnungen aufweist, wobei die Öffnungen eine zur Umrissform des Brennelementkastens komplementäre Form und eine lichte Weite aufweisen, die geringfügig größer ist als die Schlüsselweite des Brennelementkastens. Auf diese Weise kann ein mehr oder weniger großer Radialspalt zwischen Gehäuse und Brennelementkasten eingestellt werden, über den das Inertgas nach außen tritt. Auch lässt sich durch eine unterschiedliche Größe der Radialspalte steuern, an welchem Ende des Gehäuses die größere Inertgasmenge austritt.

Die Erfindung wird nun anhand eines in den beigefügten Zeichnungen dargestellten Ausführungsbeispiels näher erläutert. Es zeigen:
- Fig. 1: einen Längsschnitt durch eine Vorrichtung, wobei aus Vereinfachungsgründen nur ein einen Brennelementkasten umfassendes Gehäuse mit daran fixierten Bauteilen ge- zeigt ist,

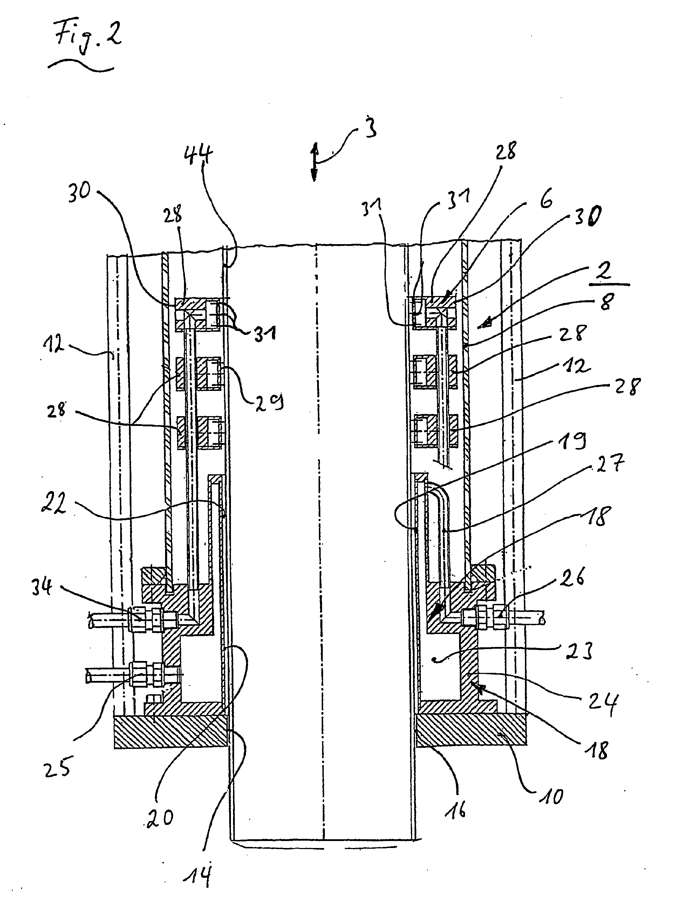

- Fig. 2: den unteren Teil des Gehäuses von Fig. 1,

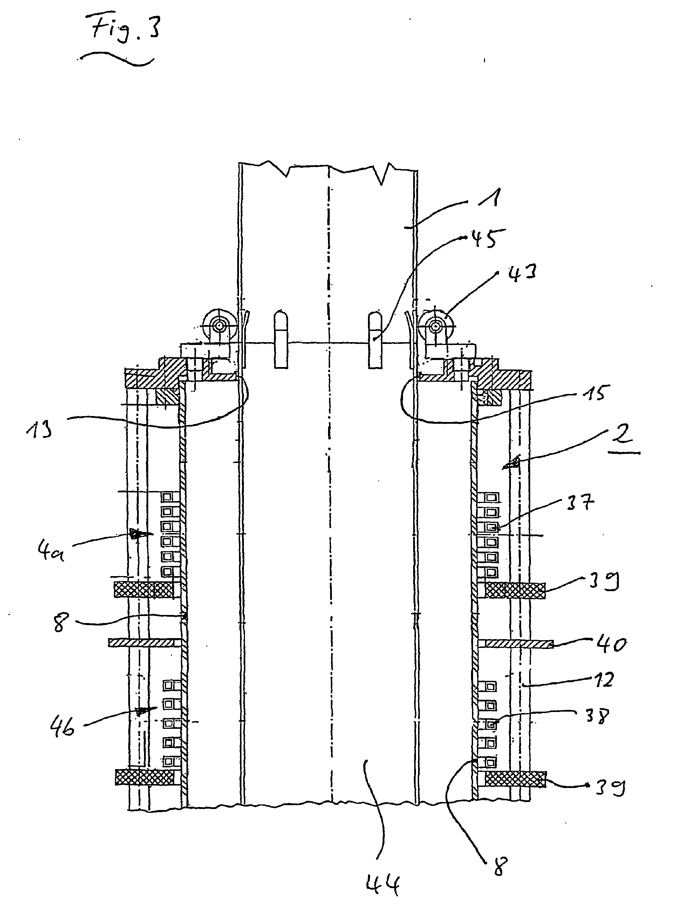

- Fig. 3: den oberen Teil des Gehäuses von Fig. 1,

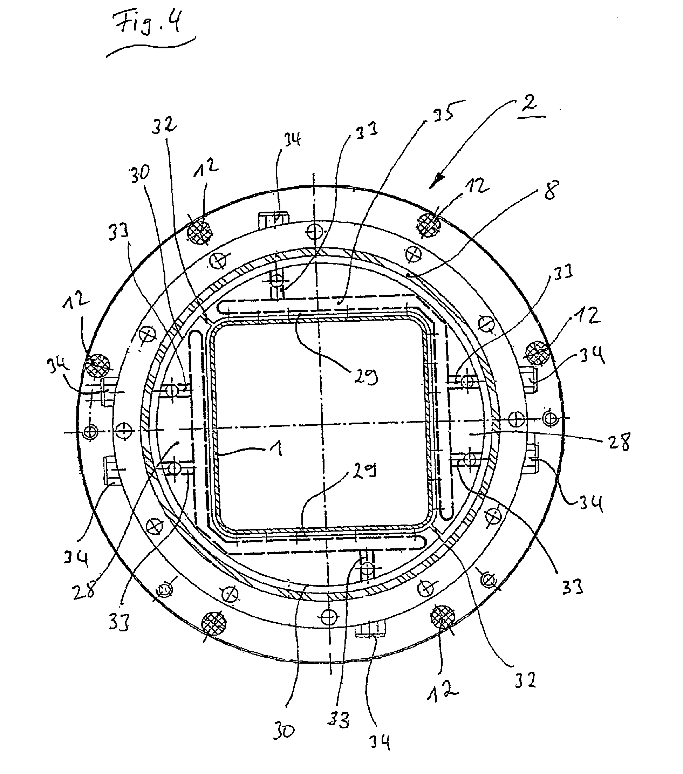

- Fig. 4: einen Querschnitt längs der Linie IV-IV in Fig. 1.

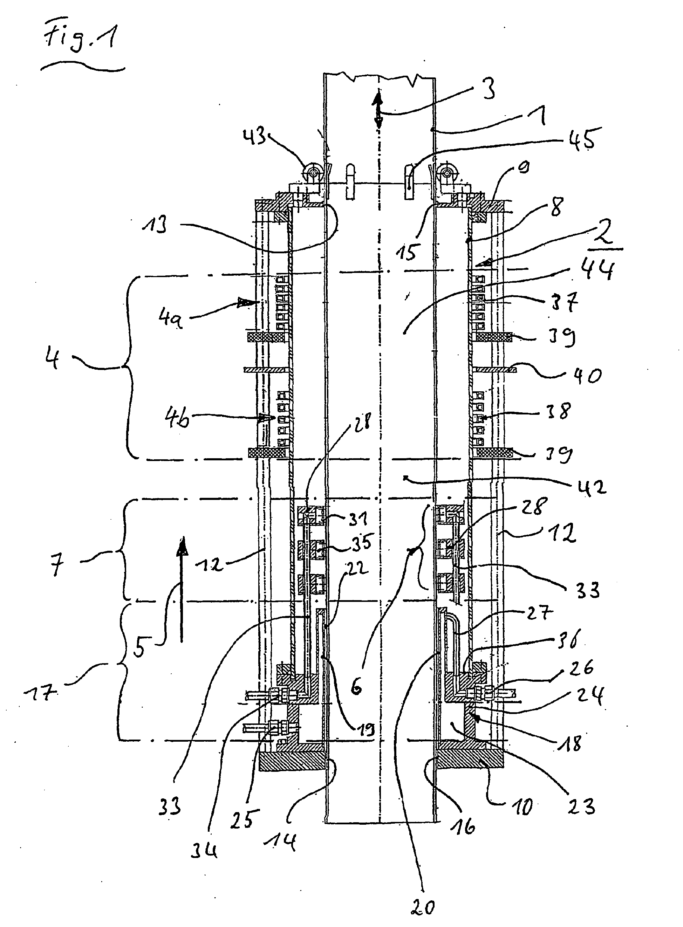

In Fig. 1 ist eine Vorrichtung zur Wärmebehandlung eines Brennelementkastens 1 gezeigt. Sie umfasst ein vertikal bzw. in Kastenlängsrichtung 3 an einem Gestell (nicht dargestellt) geführtes Gehäuse 2, eine Heizzone 4 mit einer ersten Heizeinrichtung 4a und einer zweiten Heizeinrichtung 4b sowie eine Düsenanordnung 6, die eine erste Kühlzone 7 bildet. Das Gehäuse 2 umfasst einen Zylinder 8 aus Glas, also aus einem Material, das für elektromagnetische Felder durchlässig ist. Weiterhin umfasst das Gehäuse 2 einen oberen Flansch 9 und einen unteren Flansch 10, wobei die beiden Flansche 9, 10 etwa kreisscheibenförmig ausgebildet sind und über Stangen 12, die koaxial außerhalb des Zylinders 8 angeordnet sind, miteinander verbunden sind. Die Flansche 9,10 weisen jeweils eine zentrale Öffnung 13 bzw. 14 auf. Die Öffnungen 13,14 weisen eine zur Umrissform des Brennelementkasten 1 komplementäre Form auf und sind vom Brennelementkasten 1 unter Freilassung eines Radialspaltes 15 bzw. 16 während der Wärmebehandlung durchgriffen. Unterhalb der ersten Kühlzone 7 ist eine zweite Kühlzone 17 vorhanden, die von einem wassergekühlten Kühlkörper 18 gebildet ist. Der Kühlkörper 18 ist im wesentlichen ein doppelwandiger Hohlzylinder, dessen Innenwand 19 eine zentrale Öffnung 20 umgrenzt. Deren lichte Weite ist geringfügig größer als die Schlüsselweite des Brennelementkastens 1, so dass während der Wärmebehandlung zwischen den genannten Teilen ein Radialspalt 22 frei bleibt. An die Innenwand 19 und die Außenwand 24 schließen einen Hohlraum 23 zwischen sich ein. Der untere Abschnitt des Hohlraumes 23 ist radial verbreitert. In diesem Bereich ist auch die Außenwand 24 des Kühlkörpers 18 stärker ausgebildet und trägt an diametral gegenüberliegenden Stellen einen Einlassstutzen 25 und einen Auslassstutzen 26. Der Auslassstutzen 26 ist über eine Leitung 27 mit dem oberen Ende des Hohlraumes 23 verbunden.

Die Düsenanordnung 6 umfasst insgesamt sechs Düsen 28. Jeweils zwei der Düsen 28 sind in einer Radialebene des Gehäuses 2 angeordnet und umfassen jeweils den halben Innenumfang des Gehäuses 2. Die nach innen gerichteten Austrittsöffnungen 31 aufweisenden Seiten der Düsen 28 bilden einen Winkel von etwa 90° und erstrecken sich im Anwendungsfall parallel zu den Außenflächen eines Brennelementkastens 1. Die Außenseiten 30 der Düsen 28 sind entsprechend der Innenfläche des Gehäuses kreisförmig gekrümmt. Zwischen zwei in einer Radialebene angeordneten Düsen 28 ist ein Zwischenraum 32 vorhanden, die Düsen sind also elektrisch voneinander getrennt, so dass eine induktive Ankopplung an ein elektromagnetisches Feld einer Heizzone 4a, 4b verhindert ist. Die Düsen 28 sind über Leitungen 33, die sich in Kastenlängsrichtung innerhalb des Gehäuses 2 erstrecken, mit einem Inertgas, etwa Argon, beaufschlagt. Jeder Düse 28 ist eine eigene Leitung 33 und ein im unteren Teil des Kühlkörpers 18 angeordneter Anschlussstutzen 34 zugeordnet. Die Leitungen 33 münden mit ihrem stromabwärts gelegenen Ende in einen Hohlraum 35 in den Düsen 28, welcher mit den Austrittsöffnungen 31 in Verbindung steht.

Das Gehäuse 2 stützt sich am oberen Ende am oberen Flansch 9 und mit seinem unteren Ende an einer Radialschulter 36 des Kühlkörpers 18 ab, der vom unteren Flansch 10 getragen wird. Für Ausführungsbeispiele, bei denen ein Kühlkörper 18 nicht vorgesehen ist, ist anstelle des Kühlkörpers 18 ein Flansch (nicht gezeigt) vorhanden, an dem sich das Gehäuse 2 unterseits abstützt und der die Anschlussstutzen 34 trägt. Die erste Heizeinrichtung 4a umfasst eine Induktionsspule 37 und die in Bearbeitungsrichtung 5 gesehen nachfolgende zweite Heizeinrichtung 4b eine Induktionsspule 38, welche mit ihren Windungen den Außenumfang des Gehäuses 2 koaxial umfassen. Die Induktionsspulen 37, 38 weisen einen Spulenträger 39 auf. Zwischen der ersten und zweiten Induktionsspule 37, 38 ist eine elektromagnetische Abstimmung in Form eines das Gehäuse ringförmig umfassenden Flansches 40 aus einem metallischen Material vorhanden.

Zur Wärmebehandlung eines Brennelementkastens 1 wird das Gehäuse 2 nebst den daran fixierten Teilen bei feststehendem Brennelementkasten in Kastenlängsrichtung 3 bzw. in Bearbeitungsrichtung 5, beispielsweise bei vertikal ausgerichtetem Brennelementkasten nach oben, bewegt. Die Geschwindigkeit des Gehäuses beträgt dabei etwa 100 bis 300 mm/min, vorzugsweise 200 mm/min. Die Aufheizung in das Betaphasen-Gebiet erfolgt durch die beiden Heizeinrichtungen 4a und 4b bzw. durch deren Induktionsspulen 37 bzw. 38, wobei die erste Induktionsspule 37 die leistungsstärkere ist und den überwiegenden Teil der erforderlichen Wärmemenge zuführt. Für die Induktionsspule 37 ist eine reine Leistungssteuerung vorgesehen. Die schwächer ausgelegte Induktionsspule 38 der zweiten Heizzone 4b dagegen ist Teil eines Temperaturregelkreises. Sie dient dazu, die Behandlungstemperatur auf den jeweils gewünschten Wert exakt einzuregeln. Während des Durchgangs eines Kastenabschnitts durch die zweite Heizzone 4b wird dabei einem Kastenabschnitt nur noch eine vergleichsweise geringe Wärmemenge zugeführt. Die Temperatur eines die erste Heizeinrichtung verlassenden Kastenabschnitts wird berührungslos durch ein Zweifarben-Pyrometer (nicht dargestellt) bestimmt. Die Regelung ist z.B. so eingestellt, dass ein die Heizzone (4) durchlaufender Längsabschnitt des Brennelementkastens 1 auf eine Temperatur von etwa 1100°C erwärmt wird. Nachdem ein Brennelementkasten die erste Heizeinrichtung 4a verlassen hat, gelangt er zunächst in den durch den Axialabstand 42 zwischen der Heizzone 4 und der Kühlzone 7 bestimmten Bereich. Im Anschluss daran durchläuft er in die Kühlzone 7, wo je nach Intensität und einer eventuellen Vorkühlung des applizierten Inertgasstroms eine mehr oder weniger schnelle Abkühlung erfolgt. In der Kühlzone 7 wird ein sich im Betaphasen-Gebiet befindender Längsabschnitt des Brennelementkastens im Gegensatz zum Abschrecken mit Wasser relativ langsam auf eine im Alphaphasen-Gebiet liegende Temperatur abgekühlt, wobei der über die Düsen 28 zugeführte Inertgasstrom derart eingestellt wird, dass ein Brennkastenabschnitt während des Durchtritts durch die Kühlzone 7 mindestens mit einer Abschreckrate dT/dt > 10 K/s abgekühlt wird. Die Abkühlung wird dabei durch entsprechende Bemessung des zugeführten Inertgasstroms, der vorzugsweise zwischen 0,010 und 0,080 kg/s liegt, insbesondere 0,032 kg/s beträgt, und Auslegung der Relativgeschwindigkeit zwischen Brennelementkasten 1 und Gehäuse 2 so eingestellt, dass das Brennkastenmaterial kurzzeitig, etwa einige Sekunden, auf einer oberhalb etwa 630°C liegenden Temperatur gehalten wird, um ein Wachstum der ursprünglich in sehr feiner Form ausgeschiedenen Sekundärphasen zu erreichen. Außerdem wird die Abkühlung so gesteuert, dass sich eine Korngröße von weniger als 100 µm einstellt. Mit Hilfe des Kühlkörpers 18 der zweiten Kühlzone 17 wird schließlich noch Restwärme entfernt, damit ein das Gehäuse 2 unterseits verlassender und der Atmosphäre ausgesetzter Kastenabschnitt eine unterhalb der Anlauftemperatur (etwa 150°C) aufweisende Temperatur hat. Damit auch die Innenfläche des Brennelementkastens während der Wärmebehandlung nicht oxidiert wird, wird im Innenraum des Brennelementkastens 1 eine Inertgasatmosphäre aufrecht erhalten.

Zur Führung des Gehäuses am Brennelementkasten 1 sind an der Oberseite des oberen Flansches 9 Führungsrollen 43 vorhanden, die mit der Außenfläche des Brennelementkastens 1 zusammen wirken. Um zu gewährleisten, dass der Brennelementkasten 1 über seine gesamte Länge eine gleichbleibende Wärmebehandlung erfährt, sind auf die obere und untere Stirnseite des Brennelementkasten 1 als Anfahr- bzw. Auslaufstrecke dienende Kastenabschnitte 44 lösbar aufgesteckt. Zu diesem Zweck sind an der Innenseite eines Kastenabschnittes 44 Laschen 45 angeformt, die über die Stirnseite des Kastenabschnittes 44 hinaus stehen.

### Bezugszeichenliste

- 1: Brennelementkasten
- 2: Gehäuse
- 3: Kastenlängsrichtung
- 4: Heizzone
- 4a: Heizeinrichtung
- 4b: Heizeinrichtung
- 5: Bearbeitungsrichtung
- 6: Düsenanordnung
- 7: erste Kühlzone
- 8: Zylinder
- 9: Flansch
- 10: Flansch
- 12: Stange
- 13: Öffnung
- 14: Öffnung
- 15: Radialspalt
- 16: Radialspalt
- 17: zweite Kühlzone
- 18: Kühlkörper
- 19: Innenwand
- 20: Öffnung
- 22: Radialspalt
- 23: Hohlraum
- 24: Außenwand
- 25: Einlassstutzen
- 26: Auslassstutzen
- 27: Leitung
- 28: Düse
- 29: Innenseite
- 30: Außenseite
- 31: Austrittsöffnung
- 32: Zwischenraum
- 33: Leitung
- 34: Anschlussstutzen
- 35: Hohlraum
- 36: Radialschulter
- 37: erste Induktionsspule
- 38: zweite Induktionsspule
- 39: Spulenträger
- 40: Flansch
- 42: Axialabstand
- 43: Führungsrolle
- 44: Kastenabschnitt
- 45: Lasche

## Patentansprüche

1. Verfahren zur Wärmebehandlung eines Brennelementkastens (1) aus Zircaloy, bei dem dieser kontinuierlich relativ zu einer Wärmebehandlungsvorrichtung bewegt wird und dabei längenabschnittsweise mit Hilfe einer ihn umgreifenden induktiven Heizzone (4) in das Betaphasen-Gebiet erwärmt und ein derart erwärmter Längsabschnitt nach Verlassen der Heizzone (4) in einer Kühlzone (7) auf eine im Alphaphasen-Gebiet liegende Temperatur abgekühlt wird,
**dadurch gekennzeichnet,**
**dass** die Wärmebehandlung mit Hilfe wenigstens zweier in Kastenlängsrichtung (3) voneinander beabstandeter, unabhängig voneinander arbeitender und jeweils wenigstens eine Induktionsspule (37,38) enthaltender, eine Heizzone (4) bildender Heizeinrichtungen (4a, 4b) erfolgt, wobei ein in die Heizzone (4) eintretender Kastenabschnitt mit einer ersten Heizeinrichtung (4a) aufgeheizt und anschließend mit einer gegenüber der ersten Heizeinrichtung (4a) leistungsschwächeren zweiten Heizeinrichtung (4b) wärmebehandelt wird und dass die Abkühlung in das Alphaphasen-Gebiet mit Hilfe eines auf die Außenfläche des Brennelementkastens applizierten Inertgasstroms erfolgt.

2. Verfahren nach Anspruch 1,
**dadurch gekennzeichnet,**
**dass** mit einer ersten Heizeinrichtung (4a) eine Erwärmung des Brennelementkastens (1) auf eine unterhalb der Solltemperatur liegende Temperatur erfolgt und anschließend mit einer nachfolgenden zweiten Heizeinrichtung (4b) die zur Erreichung der Solltemperatur noch fehlende Wärmemenge zugeführt wird.

3. Verfahren nach Anspruch 1 oder 2,
**dadurch gekennzeichnet,**
**dass** einem auf Solltemperatur erwärmten Kastenabschnitt mit einer nachfolgenden zweiten Heizeinrichtung (4b) so viel Wärme zugeführt wird, dass dessen Temperatur gehalten wird oder dass sich seine Abkühlung verlangsamt.

4. Verfahren nach einem der vorhergehenden Ansprüche,
**dadurch gekennzeichnet,**
**dass** eine erste Heizeinrichtung (4a) leistungsgeregelt und eine zweite Heizeinrichtung (4b) temperaturgeregelt ist, wobei eine berührungslose Messung der Kastentemperatur erfolgt.

5. Verfahren nach Anspruch 4,
**gekennzeichnet**
**durch** eine Temperaturmessung mit Hilfe eines Zweifarben- oder Quotienten-Pyrometers.

6. Verfahren nach einem der vorhergehenden Ansprüche,
**dadurch gekennzeichnet,**
**dass** auf der Außenfläche des Brennelementkastens (1) ein Inertgaspolster aufrechterhalten wird, welches sich in Kastenlängsrichtung,über die Heizzone (4) und die Kühlzone (7) hinweg erstreckt.

7. Verfahren nach Anspruch 6,
**dadurch gekennzeichnet,**
**dass** das Inertgaspolster in einem relativ zum Brennelementkasten (1) bewegten und diesen koaxial umgreifenden Gehäuse (2) aufrechterhalten wird.

8. Verfahren nach einem der vorhergehenden Ansprüche,
**dadurch gekennzeichnet,**
**dass** die relative Geschwindigkeit zwischen Brennelementkasten und Heiz- bzw. Kühlzone (4,7), die Länge des Inertgaspolsters und die zur Kühlung zugeführte Inertgasmenge so aufeinander abgestimmt sind, dass ein das Inertgaspolster bzw. das Gehäuse (2) verlassender Kastenbereich eine unterhalb der Anlauftemperatur des jeweils verwendeten Kastenmaterials liegende Temperatur hat.

9. Verfahren nach einem der vorhergehenden Ansprüche,
**dadurch gekennzeichnet,**
**dass** in der Kühlzone neben der Gaskühlung eine zusätzliche Abkühlung des Brennelementkastens (1) mit Hilfe eines diesen umfassenden, mit Wasser gekühlten Kühlkörpers (18) erfolgt.

10. Verfahren nach einem der vorhergehenden Ansprüche,
**dadurch gekennzeichnet,**
**dass** während der Wärmebehandlung im Innenraum des Brennelementkastens (1) eine Inertgas-Atmosphäre aufrechterhalten wird.

11. Verfahren nach einem der vorhergehenden Ansprüche,
**dadurch gekennzeichnet,**
**dass** der Brennelementkasten (1) während der Wärmebehandlung ortsfest angeordnet wird und die Heizzone (4) und die Kühlzone in Kastenlängsrichtung (3) bewegt werden.

12. Verfahren nach einem der vorhergehenden Ansprüche,
**dadurch gekennzeichnet,**
**dass** an beiden Enden des Brennelementkastens (1) ein als Anfahr- bzw. Auslaufstrecke dienender Kastenabschnitt (44) lösbar fixiert wird.

13. Vorrichtung zur kontinuierlichen Wärmebehandlung eines Brennelementkasten aus einer Zirkoniumlegierung, wobei der Brennelementkasten zur Erwärmung in das Betaphasen-Gebiet und einer anschließenden Abkühlung in das Alphaphasen-Gebiet relativ durch die Vorrichtung hindurch bewegbar ist,
**gekennzeichnet durch**
- wenigstens eine erste Heizeinrichtung und wenigstens eine dieser in Bearbeitungsrichtung () nachfolgenden zweiten Heizeinrichtung, wobei die Heizeinrichtungen eine Heizzone () bilden und jeweils mindestens eine den Brennelementkasten umgreifende Induktionsspule aufweisen, und wobei eine erste Heizeinrichtung eine stärkere Leistung aufweist als eine zweite Heizeinrichtung,
- eine mit Axialabstand zur Heizzone (4) angeordnete, eine Kühlzone (7) bildenden Kühleinrichtung, die wenigstens eine Düse umfasst, mit der ein Inertgasstrom vollumfänglich auf die Außenfläche eines Brennelementkastens (1) leitbar ist.

14. Vorrichtung nach Anspruch 13,
**dadurch gekennzeichnet,**
**dass** die erste Heizeinrichtung () leistungsgeregelt und die zweite Heizeinrichtung () abhängig von der Temperatur des Brennelementkastens geregelt ist.

15. Vorrichtung nach Anspruch 13 oder 14,
**gekennzeichnet durch**
- ein im Wesentlichen zylindrischen Gehäuse (2), dessen lichte Weite so bemessen ist, dass es einen Brennelementkasten (1) mit Radialabstand koaxial umfassen kann, und dessen Innenraum mit einem Inertgas beschickbar ist,
- einer am Gehäuse (2) angeordneten, sich über einen Längsabschnitt des Gehäuses (2) erstreckenden, von wenigstens zwei Heizeinrichtungen () gebildeten Heizzone (4), und
- einer mit Axialabstand zur Heizzone (4) angeordneten Kühlzone (7), die wenigstens eine Düse umfasst, mit der ein Inertgasstrom vollumfänglich auf die Außenfläche eines Brennelementkastens (1) leitbar ist.

16. Vorrichtung nach Anspruch 15,
**dadurch gekennzeichnet,**
**dass** die Induktionsspule (37) einer Heizeinrichtung am Außenumfang des Gehäuses (2) angeordnet ist, wobei das Gehäuse (2) zumindest in dem von der Induktionsspule (37) umfassten Bereich aus einem Material besteht, das für das von der Induktionsspule (37) erzeugte elektromagnetische Feld durchlässig ist.

17. Vorrichtung nach einem der vorhergehenden Ansprüche,
**dadurch gekennzeichnet,**
**dass** zwischen der ersten Heizeinrichtung () und der zweiten Heizeinrichtung () eine elektrisch leitende Abschirmung vorhanden ist.

18. Vorrichtung nach einem der vorhergehenden Ansprüche,
**dadurch gekennzeichnet,**
**dass** wenigstens zwei Düsen (28) vorgesehen sind, die in Umfangsrichtung des Gehäuses gesehen elektrisch voneinander getrennt sind.

19. Vorrichtung nach einem der vorhergehenden Ansprüche,
**dadurch gekennzeichnet,**
**dass** eine Düse (28) innerhalb des Gehäuses angeordnet ist.

20. Vorrichtung nach einem der vorhergehenden Ansprüche,
**dadurch gekennzeichnet,**
**dass** das Gehäuse (2) zwei stirnseitige, im Anwendungsfall von einem Brennelementkasten (1) durchgriffene Öffnungen (13,14) mit einer zur Umrissform des Brennelementkastens (1) komplementären Form aufweist.

## Claims

1. Method for heat treating a fuel assembly channel (1) made of zircaloy, in which the channel is continuously moved relative to a heat-treatment device and, in the process, longitudinal sections of it are heated to the beta phase range with the aid of an inductive heating zone (4) encompassing the fuel assembly channel and a longitudinal section heated in this manner is cooled after leaving the heating zone (4) in a cooling zone (7) to a temperature within the alpha phase range, **characterized in that** the heat treatment is effected with the aid of at least two heating devices (4a, 4b), which are spaced apart from one another in the longitudinal direction (3) of the channel, operate independently of each other, each comprise at least one induction coil (37, 38) and together form a heating zone (4), wherein a channel section entering the heating zone (4) is heated using a first heating device (4a) and then heat-treated using a second heating device (4b) which has less power than the first heating device (4a) and **in that** cooling to the alpha phase range is effected with the aid of a stream of inert gas applied to the outer surface of the fuel assembly channel.

2. Method according to Claim 1, **characterized in that** a first heating device (4a) is used to heat the fuel assembly channel (1) to a temperature below the set temperature and then a downstream second heating device (4b) is used to supply the amount of heat still needed to reach the set temperature.

3. Method according to Claim 1 or 2, **characterized in that** a sufficient amount of heat is supplied to a channel section heated to the set temperature using a downstream second heating device (4b) for the channel section's temperature to be maintained or for its cooling rate to decelerate.

4. Method according to one of the preceding claims, **characterized in that** a first heating device (4a) is controlled in terms of its power and a second heating device (4b) is controlled in terms of its temperature, the channel temperature being contactlessly measured.

5. Method according to Claim 4, **characterized by** a temperature measurement with the aid of a two-color pyrometer or quotient pyrometer.

6. Method according to one of the preceding claims, **characterized in that** an inert-gas blanket is maintained on the outer surface of the fuel assembly channel (1) and extends in the longitudinal direction of the channel across the heating zone (4) and across the cooling zone (7).

7. Method according to Claim 6, **characterized in that** the inert-gas blanket is maintained in a housing (2) which moves in relation to the fuel assembly channel (1) and coaxially encompasses the latter.

8. Method according to one of the preceding claims, **characterized in that** the relative velocity between the fuel assembly channel and the heating and cooling zone (4, 7), the length of the inert-gas blanket and the amount of inert gas supplied for cooling are coordinated such that a channel region leaving the inert-gas blanket and the housing (2) has a temperature which is below the tarnishing temperature of the particular channel material used.

9. Method according to one of the preceding claims, **characterized in that,** besides the gas cooling, additional cooling of the fuel assembly channel (1) takes place in the cooling zone with the aid of a heat sink (18), which surrounds the fuel assembly channel and is cooled using water.

10. Method according to one of the preceding claims, **characterized in that** during the heat treatment, an inert-gas atmosphere is maintained in the interior of the fuel assembly channel (1).

11. Method according to one of the preceding claims, **characterized in that** the fuel assembly channel (1) is arranged in a stationary position during the heat treatment and the heating zone (4) and the cooling zone are moved in the longitudinal direction (3) of the channel.

12. Method according to one of the preceding claims, **characterized in that** a channel section (44) used as inlet and outlet path is releasably attached to both ends of the fuel assembly channel (1).

13. Apparatus for continuously heat treating a fuel assembly channel made of a zirconium alloy, wherein the fuel assembly channel can move relatively through the device for heating to the beta phase range and subsequent cooling to the alpha phase range, **characterized by**
- at least one first heating device and at least one second heating device downstream of the former in the processing direction, the heating devices together forming a heating zone and having in each case at least one induction coil encompassing the fuel assembly channel, and a first heating device being more powerful than a second heating device, and
- a cooling device which is arranged at an axial spacing from the heating zone (4), forms a cooling zone (7) and comprises at least one nozzle that can be used to pass a stream of inert gas onto the entire outer surface of a fuel assembly channel (1).

14. Apparatus according to Claim 13, **characterized in that** the first heating device is controlled in terms of its power and the second heating device is controlled as a function of the temperature of the fuel assembly channel.

15. Apparatus according to Claim 13 or 14, **characterized by**
- a substantially cylindrical housing (2), whose clear width is dimensioned such that it can coaxially surround a fuel assembly channel (1) with radial spacing, and whose interior can be supplied with an inert gas,
- a heating zone (4) which is arranged on the housing (2), extends over a longitudinal section of the housing (2) and is formed by at least two heating devices, and
- a cooling zone (7) which is arranged at an axial spacing from the heating zone (4) and comprises at least one nozzle that can be used to pass a stream of inert gas onto the entire outer surface of a fuel assembly channel (1).

16. Apparatus according to Claim 15, **characterized in that** the induction coil (37) of a heating device is arranged on the outer circumference of the housing (2), wherein at least the region, surrounded by the induction coil (37), of the housing (2) comprises a material which is permeable to the electromagnetic field produced by the induction coil (37).

17. Apparatus according to one of the preceding claims, **characterized in that** an electrically conductive shield is provided between the first heating device and the second heating device.

18. Apparatus according to one of the preceding claims, **characterized in that** at least two nozzles (28) are provided which are electrically insulated from one another in the circumferential direction of the housing.

19. Apparatus according to one of the preceding claims, **characterized in that** a nozzle (28) is arranged inside the housing.

20. Apparatus according to one of the preceding claims, **characterized in that** the housing (2) has two end openings (13, 14) through which a fuel assembly channel (1) passes when it is being used, the openings having a shape which complements the contour of the fuel assembly channel (1).

## Revendications

1. Procédé pour le traitement thermique d'un boîtier-canal d'assemblage combustible (1) en en alliage de zirconium, selon lequel celui-ci est déplacé en continu par rapport à un dispositif de traitement thermique et chauffé par tronçons longitudinaux à l'aide d'une zone de chauffage (4) par induction périphérique dans le domaine de phase béta, et un tel tronçon longitudinal ainsi chauffé est refroidi à une température de la région de la phase alpha, dans une zone de refroidissement (7), après avoir quitté la zone de chauffage (4),
**caractérisé en ce que**
le traitement thermique est effectué à l'aide d'au moins deux dispositifs de chauffage (4a, 4b) formant une zone de chauffage (4), espacés l'un de l'autre dans le sens longitudinal du boîtier-canal (3), travaillant indépendamment l'un de l'autre et contenant chacun au moins une bobine d'induction (37, 38), un tronçon de boîtier pénétrant dans la zone de chauffage (4) étant chauffé avec un premier dispositif de chauffage (4a), puis traité thermiquement avec un deuxième dispositif de chauffage (4b) dont la puissance est plus faible que celle du premier dispositif de chauffage (4a), et **en ce que** le refroidissement dans la région de la phase alpha est effectué à l'aide d'un flux de gaz inerte appliqué sur la surface extérieure du boîtier-canal d'assemblage combustible.

2. Procédé selon la revendication 1,
**caractérisé en ce que**
un premier dispositif de chauffage (4a) permet de chauffer le boîtier-canal d'assemblage combustible (1) à une température inférieure à la température de réglage, puis un deuxième dispositif de chauffage (4b) consécutif permet de rajouter la quantité de chaleur manquante pour atteindre la température de réglage.

3. Procédé selon l'une des revendications 1 ou 2,
**caractérisé en ce que**
un tronçon de boîtier-canal chauffé à la température de réglage reçoit une quantité de chaleur par un deuxième dispositif de chauffage (4b) consécutif, de sorte que sa température est maintenue ou que son refroidissement est ralenti.

4. Procédé selon l'une des revendications précédentes,
**caractérisé en ce que**
un premier dispositif de chauffage (4a) est réglé en puissance et un deuxième dispositif de chauffage (4b) est réglé en température, la température du boîtier-canal étant mesurée sans contact.

5. Procédé selon la revendication 4,
**caractérisé en ce que**
la température est mesurée à l'aide d'un pyromètre bi-chromatique ou à quotient.

6. Procédé selon l'une des revendications précédentes,
**caractérisé en ce que**
un matelas de gaz inerte est maintenu sur la surface extérieure du boîtier-canal d'assemblage combustible (1), en s'étendant sur la zone de chauffage (4) et la zone de refroidissement (7), dans le sens longitudinal du boîtier.

7. Procédé selon la revendication 6,
**caractérisé en ce que**
le matelas de gaz inerte est maintenu dans un boîtier (2) déplacé par rapport au boîtier-canal d'assemblage combustible (1) et entourant celui-ci de façon coaxiale.

8. Procédé selon l'une des revendications précédentes,
**caractérisé en ce que**
la vitesse relative entre le boîtier-canal d'assemblage combustible et la zone de chauffage ou de refroidissement (4, 7), la longueur du matelas de gaz inerte et la quantité de gaz inerte nécessaire au refroidissement sont coordonnées de telle manière, qu'une zone de boîtier-canal quittant le matelas de gaz inerte ou le boîtier (2) possède une température inférieure à la température de départ de chaque matériau de boîtier-canal utilisé.

9. Procédé selon l'une des revendications précédentes,
**caractérisé en ce que**
dans la zone de refroidissement, en plus du refroidissement du gaz, a lieu un refroidissement supplémentaire du boîtier-canal d'assemblage combustible (1), à l'aide d'un corps de refroidissement (18) refroidi à l'eau, enrobant celui-ci.

10. Procédé selon l'une des revendications précédentes,
**caractérisé en ce que**
une atmosphère de gaz inerte est maintenue pendant le traitement thermique dans l'espace intérieur du boîtier-canal d'assemblage combustible (1).

11. Procédé selon l'une des revendications précédentes,
**caractérisé en ce que**
le boîtier-canal d'assemblage combustible (1) est disposé fixement pendant le traitement thermique, et la zone de chauffage (4) ainsi que la zone de refroidissement sont déplacées dans le sens longitudinal du boîtier (3).

12. Procédé selon l'une des revendications précédentes,
**caractérisé en ce que**
un tronçon de boîtier (44) servant de trajet d'arrivée et de sortie est fixé de manière amovible aux deux extrémités du boîtier-canal d'assemblage combustible (1).

13. Dispositif pour le traitement thermique continu d'un boîtier-canal d'assemblage combustible en alliage de zirconium, dans lequel le boîtier-canal d'assemblage combustible est déplaçable à travers le dispositif, dans la région de phase béta pour le chauffage et dans la région de phase alpha consécutive pour le refroidissement,
**caractérisé par**
- au moins un premier dispositif de chauffage et au moins un deuxième dispositif de chauffage consécutive à la première dans le sens de traitement (), les dispositifs de chauffage formant une zone de chauffage () et comportant chacun au moins une bobine d'induction entourant le boîtier-canal d'assemblage combustible, et un premier dispositif de chauffage présentant une puissance supérieure à celle d'un deuxième dispositif de chauffage,
- un dispositif de refroidissement formant une zone de refroidissement (7), disposé de façon axialement espacée par rapport à la zone de chauffage (4), comprenant au moins une buse, avec laquelle un flux de gaz inerte peut être dirigé vers l'ensemble de la surface extérieure du boîtier-canal d'assemblage combustible (1).

14. Dispositif selon la revendication 13,
**caractérisé en ce que**
le premier dispositif de chauffage () est réglé en puissance et le deuxième dispositif de chauffage () est réglé en fonction de la température du boîtier-canal d'assemblage combustible.

15. Dispositif selon l'une des revendications 13 ou 14,
**caractérisé par**
- un boîtier (2) quasiment cylindrique, dont la largeur libre est dimensionnée de telle façon, qu'il peut entourer de manière coaxiale un boîtier-canal d'assemblage combustible (1) avec un espacement radial, et dont l'espace intérieur peut être alimenté en gaz inerte,
- une zone de chauffage (4) formée par au moins deux dispositif de chauffage (), disposée sur le boîtier (2) et s'étendant sur un tronçon longitudinal du boîtier (2), et
- une zone de refroidissement (7) disposée avec un espacement axial par rapport à la zone de chauffage (4), comprenant au moins une buse permettant de diriger un flux de gaz inerte vers l'ensemble de la surface extérieure du boîtier-canal d'assemblage combustible (1).

16. Dispositif selon la revendication 15,
**caractérisé en ce que**
la bobine d'induction (37) d'un dispositif de chauffage est disposée sur le pourtour extérieur du boîtier (2), le boîtier (2) étant, au moins dans la région entourée par la bobine d'induction (37), constitué d'un matériau perméable au champ électromagnétique produit par la bobine d'induction (37).

17. Dispositif selon l'une des revendications précédentes,
**caractérisé en ce que**
un blindage électriquement conducteur est prévu entre le premier dispositif de chauffage () et le deuxième dispositif de chauffage ().

18. Dispositif selon l'une des revendications précédentes,
**caractérisé en ce que**
il est prévu au moins deux buses (28) électriquement séparées l'une de l'autre en direction du pourtour du boîtier.

19. Dispositif selon l'une des revendications précédentes,
**caractérisé en ce que**
une buse (28) est disposée à l'intérieur du boîtier.

20. Dispositif selon l'une des revendications précédentes,
**caractérisé en ce que**
le boîtier (2) comporte deux ouvertures (13, 14) traversées par un boîtier-canal d'assemblage combustible (1) lors de l'utilisation, avec une forme complémentaire à celle du contour du boîtier-canal d'assemblage combustible (1).
